Europäisches Patentamt

European Patent Office

Office européen des brevets

(11) Publication number: **0 227 133**
**A1**

## (12) EUROPEAN PATENT APPLICATION

(21) Application number: **86201999.9**

(51) Int. Cl.⁴: **H04N 5/32**

(22) Date of filing: **14.11.86**

(30) Priority: **25.11.85 NL 8503243**

(43) Date of publication of application:
**01.07.87 Bulletin 87/27**

(84) Designated Contracting States:
**BE DE FR GB IT NL**

(71) Applicant: **B.V. Optische Industrie "De Oude Delft"**
**Van Miereveltlaan 9**
**NL-2612 XE Delft(NL)**

(72) Inventor: **Beerlage, Meindert Johannes Maria**
**Popelenburg 9**
**NL-2641 MX Pijnacker(NL)**
Inventor: **Levels, Henricus Petrus Lodevicus**
**Paul Scholtenrode 31**
**NL-2717 HB Zoetermeer(NL)**

(74) Representative: **van der Burg, Louis**
**Van Miereveltlaan 9**
**NL-2612 XE Delft(NL)**

(54) Image-recording equipment for digital radiography.

(57) A radiator sensitive element has a matrix of rows (2a-2n) and columns (1a-1n) of image-recording elements. Clock signals supplied to the matrix have the image information shifted in the column direction in the time-delay-and-integration mode so that the element can be used in low radiation intensity applications. Each column further is provided with an antiblooming channel (8a-8n) so that the element can be used in low radiation intensity but high contrast applications.

FIG.1

## Image-recoiding equipment for digital radiography

The invention relates to image-recording equipment for digital radiography comprising a matrix having rows and columns of image-recording elements, and means for supplying clock signals to the matrix for the time-delay-and-integration mode of shifting image information in the column direction.

In digital radiography a beam of X-ray radiation is directed via a body to be examined to image-recording equipment consisting of a large number of image-recording elements. In this process each image-recording element receives the radiation, which may or may not have been processed further, which has been transmitted through a corresponding part of the body to be examined. As further processing, the radiation may, for example, be converted into visible Light in an X-ray detector before it is received by the image-recording equipment. Because the exposure time for each image-recording element is extremely short for the usual scanning speeds of a body to be examined in the case of image-recording equipment having a very large number of image-recording elements with, for example, dimensions of 0.1 x 0.1 mm, the signal/noise ratio of the image obtained is very poor ·of the intensity of the X-ray source has to be increased to undesirably high levels to obtain a better signal/noise ratio. In order to obtain an acceptable signal/noise ration with a relatively low dose of radiation despite this, it is known that use is made of image-recording equipment comprising a matrix having rows and columns of image-recording elements the charge which is produced during a given period in a given image-recording element as a result of the radiation received by said element during said period, is transferred during a read period to an adjacent associated vertical shift register. This takes place during the read period for all the image-recording elements in each row. At the same time, between the successive periods a relative movement is brought about between the body and image-recording equipment so that during the next period the same part of the body to be examined is imaged on the next row of image-recording elements. In this manner a charge is the sum of the charge which is generated by the radiation transmitted through a specific part of the body to be examined during charge is the sum of the charge which is transmitted through a specific part of the body to be examined during the successive periods.

This method of scanning is termed TDI (time delay and integration) and is found to be of particularly good applicability in the examination of bodies by means of X-ray radiation, it being possible for a usable image to be formed despite the fact that each image-recording element per se generates only a very small amount of charge in response to the radiation received. For a comprehensive discussion of the TDI principle reference is made to US Patent No. 4,383,327.

In applying the TDI principle to X-ray examination, the quantity of radiation which each image-recording element receives is in general very small but in view of the large dynamic range of the image to be observed, for example the human thorax, there exists the risk that such a large charge is formed in certain image-recording elements that said charge has a tendency to flow to adjacent image-recording elements, which results in a local over-exposure and an overexposed spot in the final image. This risk also exists at the edges of the image-recording equipment where the beam of X-ray radiation may bypass the body to be examined and thus strike the image-recording equipment directly. This phenomenon is termed blooming and also occurs, for example, in television image-recording equipment.

The object of the invention is to provide a solution to this problem and it provides for this purpose image-recording equipment of the abovementioned type in which, in the vicinity of each column of image-recording elements, a channel is present which can receive and drain an excess of charge from the image recording elements.

The invention will be described in more detail below on the basis of an exemplary embodiment with reference to the drawing; in this:

Figure 1 shows a diagrammatic plan view of image-recording equipment provided with an anti-blooming channel according to the invention;

Figure 2 shows a cross-section along the line II-II in Figure 1;

Figure 3a shows the surface potential profile along the arrangement of Figure 2 during a period in which no reading out is taking place;

Figure 3b shows the surface potential profile along the arrangement of Figure 2 during a period in which reading out is in fact taking place;

Figure 4 shows a diagrammatic plan view of another type of image-recording equipment provided with an anti-blooming channel according to the invention;

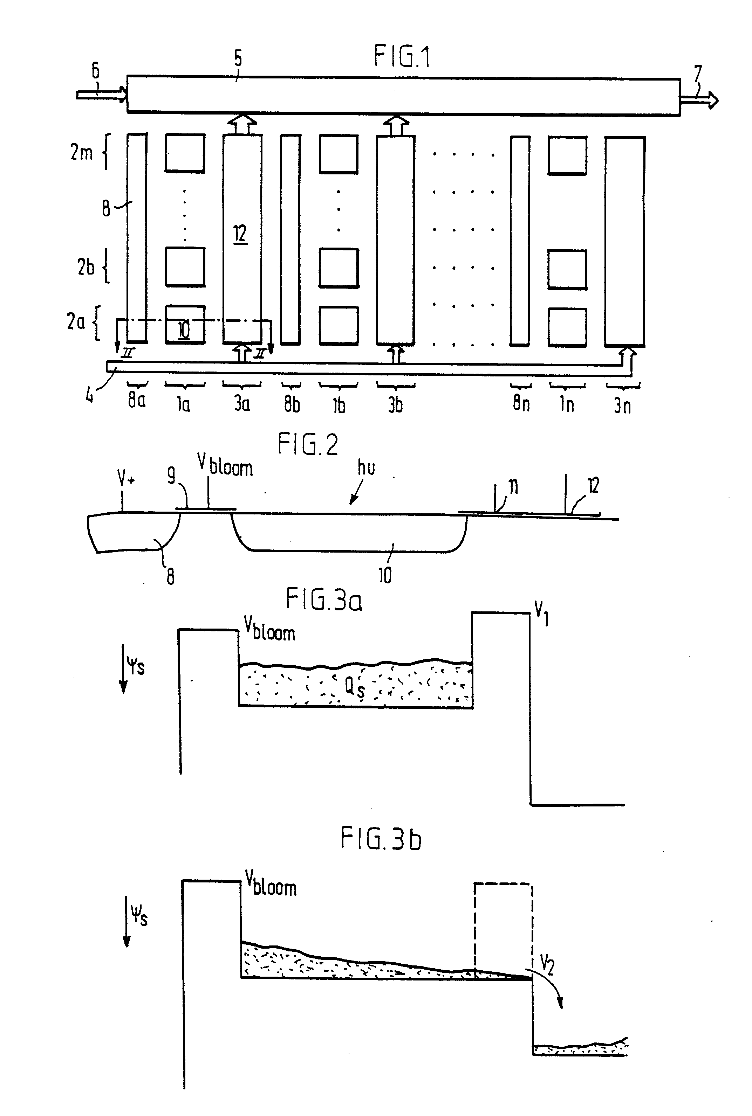

Figure 1 shows diagrammatically the structure of image-recording equipment which is equipped to operate according to the TDI principle. The equipment comprises m rows, 2a-2m respectively, of image-recording elements and n columns, 1a-1n respectively, of image-recording elements. The image-recording equipment therefore consists of m x n image-recording elements. Each of the n image-recording elements of a given column may be coupled, under the control of a read-out port electrode, to a vertical CCD shift register, 3a-3n, belonging to the column: Clock signals are supplied via a bus 4 to said shift registers 3a-3n and to the read-out port electrodes in a manner known per se. In the m-n row the shift registers of each column are connected to a horizontal shift register 5 which can also receive clock signals via a bus 6. The output signal of the horizontal shift register 5 can be removed at an output terminal 7, which signal can than be processed further. For the manner in which the charge from the individual image-recording elements, which charge corresponds to a radiation received during a given period, is transferred to the adjacent vertical shift registers and is shifted from there, using the TDI principle, to the horizontal shift register, reference is made to US Patent 4,383,327.

According to the invention provision is always made, next to each column 1a-1n of image-recording elements, of an associated anti-blooming channel, 8a-8n respectively, provision being made , between each image-recording element and the channel, of a port electrode, one of which is indicated in Figure 2 by the reference numeral 9. Figure 2 further shows an image-recording element 10 from the matrix shown in Figure 1, and also a read-out port electrode 11 and a port electrode 12 for the vertical CCD shift register 3a.

Although the anti-blooming channel 8 is shown in Figure 2 next to the column of image-recording elements, it is also possible to arrange said channel, for example, beneath the column of image-recording elements. Although this requires additional process steps during the manufacture of the image-recording equipment, it may have advantages in view of the greater density of image-recording elements which is then possible because no space has then to be made available for the anti-blooming channels.

Figure 3 shows the surface potential $\psi_s$ during the exposure of the image-recording element 10 during which a charge of $Q_s$ is formed therein under the influence of the incident radiation $h_\gamma$. A potential $V_{bloom}$ is applied to the port electrode 9 and a clock pulse with a potential $V_1$ to the read-out port electrode 11 via bus 4. During the formation of a charge it holds true that $/V_1/ > /V_{bloom}/$. If the quantity of charge which is formed in the recording element 10 under the influence of the incident radiation continuously increases, the charge will be able to flow away at a given instant from the potential well formed between $V_{bloom}$ and $V_1$. As a result of the choice of the values of $V_1$ and $V_{bloom}$, the charge will then flow away via the lower potential peak $V_{bloom}$ to the anti-blooming channel 8, which channel has good electrical conductivity so that even a fairly large quantity of charge can be removed without difficulty. This ensures in a very reliable manner that an excess of charge in image-recording element 10, or in any other image-recording element in the matrix, during a period in which the formation of charge in the element occurs, will always flow away to the anti-blooming channel 8 and not to the adjacent image elements, so that the risk of blooming is eliminated.

Figure 3b shows how, during a read-out period, the potential peak of read-out electrode 9 is changed to $V_2$, where $|V_2| < |V_1|$, as a result of which the charge is able to flow from the image-recording element 10 to the CCD shift register 3a and can be shifted from there, using the TDI principle, to a position next to the next image-recording element in the column so as to be summed during a next read-out period with the charge formed during the subsequent period in said next image-recording element, which charge, as has been explained above, is derived from the same section of the body to be irradiated.

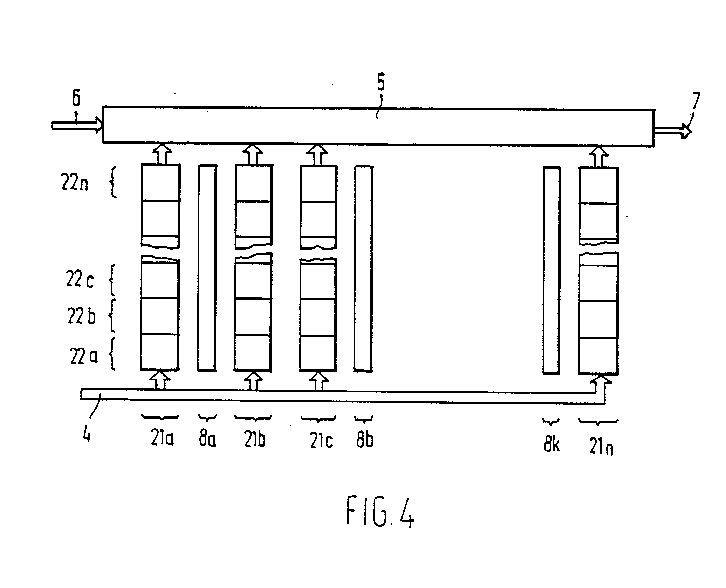

fig. 4 shows a matrix of CCD image-recording elements in which the function of converting light into charge and the formation of transporting the charge thus formed are joined in a manner known per se. In this figure parts identical to those of the embodiment according to Fig. 1 are shown with the same reference numerals. Shown in a 4 phase CCD known per se having CCD columns 21a, 21b ...21n, in which each column comprises m image-recording elements which, in the matrix, form rows 22a, 22b ... 22m. For each CCD image-recording element four electrodes, not shown, are present for the sake of the transport in vertical direction of the charge formed under the influence of striking light.

Turn and turn about between the columns of CCD image-recording elements anti-blooming channels 8a, 8b ... 8k are provided with junctions going with them and connections, not further shown, for supplying clock pulses to the electrodes. The potentials at the anti-blooming channel junctions are such that, in case so much charge is present in a CCD image-recording element that there is danger of blooming to occur, the excess of charge can flow into the anti-bloomingchannel and can be drained from there.

## Claims

1. Image-recording equipment for digital radiography comprising a matrix having rows and columns of image-recording elements, and means for supplying clock signals to the matrix for the time-delay-and-integration mode of shifting image information in the column direction, characterized in that, in the vicinity of each column of image-recording elements, a channel is present which can receive and drain an excess of charge from the image-recording elements.

2. Image-recording element according to Claim 1, characterized in that each channel is situated next to the associated column of image-recording elements.

# FIG.1

# FIG.2

# FIG.3a

# FIG.3b

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| D,Y | US-A-4 383 327 (R.A. KRUGER) * Column 1, lines 7-13; column 5, lines 10-12,45-48; figure 2 * | 1,2 | H 04 N 5/32 |
| | --- | | |
| Y | EP-A-0 026 904 (TOKYO SHIBAURA DENKI K.K.) * Page 2, lines 12-19; page 3, lines 11-23; page 4, line 12 - page 5, line 19; page 6, line 35 - page 7, line 3; page 7, lines 8-14; figure 1 * | 1,2 | |
| | --- | | |
| A | GB-A-2 007 937 (SONY) * Claim 1 * | 1 | |
| | ----- | | |

**TECHNICAL FIELDS SEARCHED (Int. Cl.4)**

H 04 N

The present search report has been drawn up for all claims

| Place of search | Date of completion of the search | Examiner |
|---|---|---|
| THE HAGUE | 19-02-1987 | KLUZ F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82